# EUROPEAN PATENT APPLICATION

(11) **EP 4 501 869 A1**
(43) Date of publication of application: **05.02.2025**
(21) Application number: 22928047.4
(22) Date of filing: 13.05.2022
(51) Int. Cl.: C03B 23/035, C03B 35/14

(54) **TRANSFER DEVICE AND USE THEREOF, AND GLASS BENDING FORMING SYSTEM**

(71) Applicant: Fuyao Glass Industry Group Co., Ltd., Fuzhou, Fujian 350300 (CN)
(72) Inventor: ZHOU, Zunguang, Fuzhou, Fujian 350301 (CN); ZHUO, Guangjin, Fuzhou, Fujian 350301 (CN); ZHENG, Zongfa, Fuzhou, Fujian 350301 (CN); ZHANG, Rongxing, Fuzhou, Fujian 350301 (CN); LI, Zhenfang, Fuzhou, Fujian 350301 (CN); CHEN, Daoding, Fuzhou, Fujian 350301 (CN); YANG, Jincheng, Fuzhou, Fujian 350301 (CN); LIN, Xi, Fuzhou, Fujian 350301 (CN); LIN, Senmao, Fuzhou, Fujian 350301 (CN)
(74) Representative: Mewburn Ellis LLP
(86) International application number: PCT/CN2022/092812
(87) International publication number: WO 2023/159776

(57) **Abstract**

A transfer device and use thereof, and a glass bending forming system are provided in the present disclosure. The transfer device includes a suction table. The suction table has a first edge-region and a second edge-region. The second edge-region is located at an inner side of the first edge-region. The first edge-region surrounds the second edge-region. The suction table defines a first suction groove, multiple second suction holes, a first suction channel, and a second suction channel. The first suction groove is defined in the first edge-region. The multiple second suction holes are defined in the second edge-region. The first suction channel is in communication with the first suction groove and is used for providing a first negative pressure. The second suction channel is in communication with the multiple second suction holes and is used for providing a second negative pressure. The first negative pressure and the second negative pressure are used for sucking at least one glass sheet on the transfer device. When the transfer device is used to transfer the glass sheet, the glass sheet can be ensured not to fall off, and the optical quality of the glass sheet can be ensured. **In** addition, when the transfer device is used in a bending forming process of the glass sheet, the yield of bending forming of the glass sheet can be improved.

## Description

### TECHNICAL FIELD

This disclosure relates to the field of transfer tool technology, and in particular to a transfer device for transferring a glass sheet and use thereof, and a glass bending forming system for bending a glass sheet.

### BACKGROUND

Designs of profile curvatures of vehicle windshield are more and more complex, and requirements for the quality of vehicle glass are higher and higher. As a result, in a bending forming process of the vehicle glass, forming of multiple times are needed, or forming of multiple times even needs to be performed on multiple glass sheets simultaneously. For example, after multiple glass sheets are subjected to preliminary bending forming by means of a pre-forming mold, the multiple glass sheets subjected to the preliminary bending forming are simultaneously transferred to a final-forming mold to complete final bending forming, and finally, the multiple glass sheets subjected to final bending forming are transferred to an annealing ring to complete annealing and cooling.

During transferring of the multiple glass sheets, a transfer device is required to provide a sufficient suction force to simultaneously lift and hold for sufficient time all the multiple glass sheets, thereby facilitating transferring and switching of the multiple glass sheets between different stations. If the suction force provided by the transfer device is insufficient, the multiple glass sheets are prone to falling off during the transferring, especially during an acceleration phase or a deceleration phase, thereby affecting production stability and reducing production efficiency. If the suction force provided by the transfer device is too large, the multiple glass sheets may press against each other because they are closely attached to each other, so that the glass sheets are prone to having problems that optical quality exceeds the standard, such as optical distortion, thereby reducing the yield of bending forming of the glass sheets.

In addition, before the bending forming, the transfer device may also be used to transfer the multiple flat glass sheets onto a bending forming mold for stacking and loading. After the bending forming, the transfer device may also be used to transfer the multiple bent glass sheets subjected to the bending forming from the bending forming mold for unloading, or the transfer device may be used to stack the multiple bent glass sheets subjected to the bending forming and simultaneously transfer the multiple bent glass sheets that are stacked to a loading table of a glass washing machine for cleaning.

### SUMMARY

The present disclosure aims to provide a transfer device and use thereof, and a glass bending forming system. When a glass sheet is transferred by using the transfer device, the glass sheet can be ensured not to fall off, and optical quality of the glass sheet can be ensured. In addition, when the transfer device is used in a bending forming process of the glass sheet, the yield of the bending forming of the glass sheet can be improved.

A transfer device is provided in the present disclosure. The transfer device includes a suction table. The suction table has a first edge-region and a second edge-region. The second edge-region is located at an inner side of the first edge-region. The first edge-region surrounds the second edge-region. The suction table defines a first suction groove, multiple second suction holes, a first suction channel, and a second suction channel. The first suction groove is defined in the first edge-region. The multiple second suction holes are defined in the second edge-region. The first suction channel is in communication with the first suction groove and is used for providing a first negative pressure. The second suction channel is in communication with the multiple second suction holes and is used for providing a second negative pressure. The first negative pressure and the second negative pressure are used for sucking at least one glass sheet on the transfer device.

The suction table further has a central region. The central region is located at an inner side of the second edge-region. The second edge-region surrounds the central region. The suction table further defines multiple third suction holes and a third suction channel. The multiple third suction holes are defined in the central region. The third suction channel is in communication with the multiple third suction holes and is used for providing a third negative pressure. The first negative pressure, the second negative pressure, and the third negative pressure are used for sucking the at least one glass sheet on the transfer device.

The first negative pressure has a vacuum pressure value of P1. The second negative pressure has a vacuum pressure value of P2, P2 being greater than P1.

The third negative pressure has a vacuum pressure value of P3, where P2 is greater than P3.

The at least one glass sheet is bent and has a temperature greater than or equal to 500°C.

At least two stacked glass sheets are sucked on the transfer device. Silica fume particles are disposed between adjacent two of the at least two glass sheets.

A clearance recess is defined in the central region. The multiple third suction holes are distributed at a recess bottom of the clearance recess.

Each of the multiple second suction holes has a larger cross-sectional area than each of the multiple third suction holes.

The multiple third suction holes are arranged in an array. The array has the number of rows greater than 1 and the number of columns greater than 1.

The first suction groove has an inner groove-wall and an outer groove-wall. The inner groove-wall is closer to the second edge-region than the outer groove-wall. In a direction opposite to a direction in which the first suction groove extends towards the first suction channel, the outer groove-wall exceeds the inner groove-wall.

A height of the outer groove-wall exceeding the inner groove-wall is larger than or equal to a thickness of one of the at least one glass sheet closest to the suction table.

A height of the outer groove-wall exceeding the inner groove-wall is smaller than or equal to a total thickness of the at least one glass sheet.

Multiple first communicating holes are defined at a groove bottom of the first suction groove. The first suction channel is in communication with the first suction groove through the multiple first communicating holes.

Each of the multiple first communicating holes has a larger cross-sectional area than each of the multiple second suction holes.

The suction table is further provided with a first boss and a second boss. The first suction groove is defined between the first boss and the second boss. The second boss is located at an outer side of the first suction groove. In a direction opposite to a direction in which the first suction groove extends towards the first suction channel, the second boss exceeds the first boss.

The first boss has a suction contact surface. The multiple second suction holes extend through the suction contact surface of the first boss.

The first boss is covered by a flexible mold textile. The flexible mold textile is configured to isolate the suction contact surface from the at least one glass sheet.

The multiple second suction holes are not completely identical in cross-sectional area, and/or the multiple second suction holes are nonuniformly distributed in the second edge-region.

The transfer device further comprises a vacuum suction device. The vacuum suction device is in communication with the first suction channel to provide the first negative pressure. The vacuum suction device is in communication with the second suction channel to provide the second negative pressure. The vacuum suction device is in communication with the third suction channel to provide the third negative pressure.

Use of a transfer device is further provided in the present disclosure. The transfer device is the above transfer device. The transfer device is configured to transfer multiple flat glass sheets onto a bending forming mold for stacking and loading, or configured to transfer multiple bent glass sheets subjected to bending forming from the bending forming mold for unloading, or configured to stack multiple bent glass sheets subjected to bending forming and simultaneously transfer the multiple bent glass sheets that are stacked to a loading table of a glass washing machine for cleaning.

A glass bending forming system is further provided in the present disclosure. The glass bending forming system includes the above transfer device. The glass bending forming further includes a heating device, a pre-forming mold, a final-forming mold, and an annealing device. The heating device is configured to heat the at least one glass sheet to have a temperature greater than or equal to 500°C. The pre-forming mold is configured to perform preliminary bending forming on the at least one glass sheet having the temperature greater than or equal to 500°C, to obtain at least one preliminary bent glass sheet having the temperature greater than or equal to 500°C. The final-forming mold is configured to perform final bending forming on the at least one preliminary bent glass sheet having the temperature greater than or equal to 500°C, to obtain at least one final bent glass sheet having the temperature greater than or equal to 500°C. The transfer device is configured to transfer at least one preliminary bent glass sheet from the pre-forming mold to the final-forming mold, and configured to transfer at least one final bent glass sheet from the final-bending-forming mold module to the pre-forming mold or an annealing ring. The annealing device is configured to anneal and cool the at least one final bent glass sheet having the temperature greater than or equal to 500°C.

In the transfer device is provided in the present disclosure, by using the first suction groove in the first edge-region of the suction table to generate the first negative pressure, the side surface of the glass sheet is sucked through the first negative pressure, and by using the second suction groove in the second edge-region of the suction table to generate the second negative pressure, the main surface of the glass sheet is sucked through the second negative pressure. In the present disclosure, by means of the first negative pressure and the second negative pressure, the at least one glass sheet is sucked on the transfer device, thereby ensuring that the at least one glass sheet will not fall off. Meanwhile, by independently controlling the vacuum pressure value of the first negative pressure and the vacuum pressure value of the second negative pressure, the transferring effect of the at least one glass sheet is ensured, and excessive squeezing between glass sheets is avoided, thereby ensuring the optical quality of the at least one glass sheet. During the bending forming of the at least one glass sheet, the yield of bending forming of the at least one glass sheet can be improved by using the transfer device provided in the present disclosure.

It can be understood that, the function of the transfer device is not limited to this. For example, the transfer device can also be configured to transfer multiple flat glass sheets onto the bending forming mold for stacking and loading, or configured to transfer multiple bent glass sheets subjected to bending forming from the bending forming mold for unloading, or configured to stack multiple bent glass sheets subjected to bending forming and simultaneously transfer the multiple bent glass sheets that are stacked to a loading table of a glass washing machine for cleaning. In the present disclosure, by means of the first negative pressure, the second negative pressure, and the third negative pressure, at least one flat glass sheet is sucked on the transfer device and is transferred to the bending forming mold for stacking and loading, or at least one bent glass sheet is sucked on the transfer device from the bending forming mold and is transferred to the station for unloading, or at least one sheet bent glass sheet is sucked on the transfer device and is transferred to the loading table of the glass washing machine for cleaning, ensuring that the glass sheet will not fall off during the transferring. Meanwhile, by independently controlling the vacuum pressure value of the first negative pressure, the vacuum pressure value of the second negative pressure, the vacuum pressure value of and the third negative pressure, the transferring effect is ensured, and the greater number of stacked glass sheets and/or heavier stacked glass sheets are transferred, so that during the transferring, larger movement speed and acceleration can be realized, and the transferring efficiency can be improved.

### BRIEF DESCRIPTION OF THE DRAWINGS

FIG. 1 is a schematic view of a part of a process of manufacturing a bent glass sheet by using a glass bending forming system provided in an embodiment of the present disclosure.
FIG. 2 is a schematic structural view of transferring a glass sheet by using a transfer device in the glass bending forming system illustrated in FIG. 1.
FIG. 3 is a schematic top view of the glass sheet in a structure illustrated in FIG. 2.
FIG. 4 is a schematic cross-sectional structural view of a suction table of the transfer device in the structure illustrated in FIG. 2.
FIG. 5 is a schematic structural bottom view of the suction table illustrated in FIG. 4.
FIG. 6 is a schematic structural top view of the suction table illustrated in FIG. 4.
FIG. 7 is a partial enlarged view of the suction table at portion A illustrated in FIG. 4.
FIG. 8 is a partial enlarged view of the suction table at portion B illustrated in FIG. 4.
FIG. 9 is a partial enlarged view of the suction table at portion C illustrated in FIG. 4.

### DETAILED DESCRIPTION

The content of the present disclosure will be further described below with reference to the accompanying drawings.

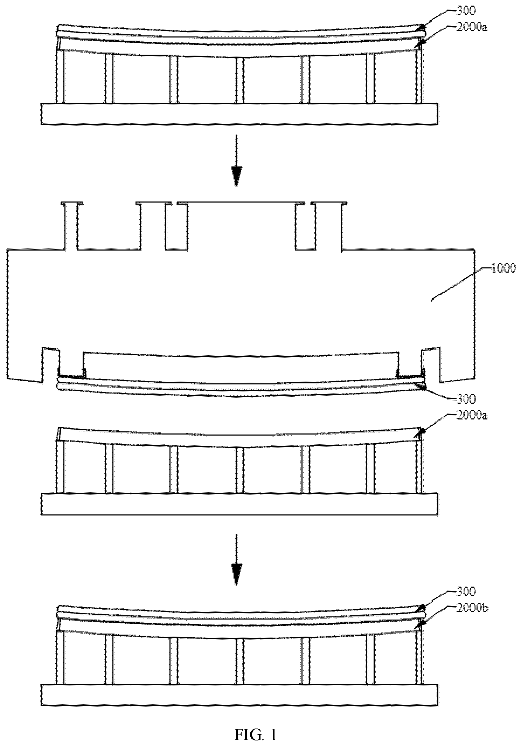

Reference can be made to FIG. 1, which is a schematic view of a part of a process of manufacturing a bent glass sheet by using a glass bending forming system provided in an embodiment of the present disclosure.

The glass bending forming system includes a heating device (not shown), a transfer device 1000, a pre-forming mold 2000a, a final-forming mold 2000b, and an annealing device (not shown). The heating device is configured to heat at least one glass sheet 300 to have a temperature greater than or equal to 500°C. In some embodiments, the heating device may be a heating furnace for heating the at least one glass sheet by radiation heating, convection heating, and the like, so that the temperature of the glass sheet is raised to be greater than or equal to 500°C for subsequent bending forming. When at least two stacked glass sheets are heated, silica fume particles for preventing glass sticking are disposed between two adjacent glass sheets.

The pre-forming mold 2000a is configured to perform preliminary bending forming on at least one glass sheet having the temperature greater than or equal to 500°C, to obtain at least one preliminary bent glass sheet 300 having the temperature greater than or equal to 500°C. In some embodiments, the pre-forming mold 2000a is a ring-type female mold having a recessed surface, the at least one glass sheet having the temperature greater than or equal to 500°C is subjected to the preliminary bending forming under the action of gravity on the ring-type female mold. After the preliminary bending forming is completed, the preliminary bent glass sheet having the temperature greater than or equal to 500°C is obtained.

The final-forming mold 2000b is configured to perform final bending forming on the at least one preliminary bent glass sheet 300 having the temperature greater than or equal to 500°C, to obtain at least one final bent glass sheet 300 having the temperature greater than or equal to 500°C. In some embodiments, the final-bending-forming mold 2000b can perform the final bending forming on the preliminary bent glass sheet having the temperature greater than or equal to 500°C through a pressure generated by air blowing and/or air pumping, and after the final bending forming is completed, the final bent glass sheet having the temperature greater than or equal to 500°C is obtained. The final-forming mold 2000b may be a concave bottom mold, such as a device for bending vehicle glass disclosed in Chinese patents CN112047616A and CN112194348A.

The transfer device 1000 is configured to transfer the preliminary bent glass sheet 300 from the pre-forming mold 2000a to the final-forming mold 2000b, and configured to transfer the final bent glass sheet 300 from the final-forming mold 2000b to the pre-forming mold 2000a or an annealing ring.

The annealing device is configured to anneal and cool the final bent glass sheet 300 having a temperature greater than or equal to 500°C.

In a specific embodiment, a process of manufacturing a bent glass sheet by using the above glass bending forming system includes the following.
(1) At least one glass sheet 300 is heated to have a temperature greater than or equal to 500°C by a heating device.
(2) The at least one glass sheet 300 heated in operation (1) is disposed into a pre-forming mold 2000a for preliminary bending forming, to obtain at least one preliminary bent glass sheet 300 having the temperature greater than or equal to 500°C.
(3) The at least one preliminary bent glass sheet 300 manufactured in operation (2) is transferred from the pre-forming mold 2000a to a final-forming mold 2000b by a transfer device 1000, and the at least one preliminary bent glass sheet 300 is subjected to final bending forming by the final-forming mold 2000b, to obtain at least one final bent glass sheet 300 having the temperature greater than or equal to 500°C.
(4) After the final bending forming, the at least one final bent glass sheet 300 manufactured in operation (3) is transferred from the final-forming mold 2000b to the pre-forming mold 2000a or an annealing ring by the transfer device 1000, the at least one final bent glass sheet 300 is got into an annealing device along with the pre-forming mold 2000a or the annealing ring, and the at least one final bent glass sheet 300 is annealed and cooled by the annealing device.

In another specific embodiment, a process of manufacturing a bent glass sheet by using the above glass bending forming system includes the following.
(1) At least one glass sheet 300 is disposed into the pre-forming mold 2000a.
(2) The at least one glass sheet 300 in the pre-forming mold 2000a is heated to have a temperature greater than or equal to 500°C by the heating device, and at least one glass sheet 300 having the temperature greater than or equal to 500°C is subjected to preliminary bending forming in the pre-forming mold 2000a, to obtain at least one preliminary bent glass sheet 300 having the temperature greater than or equal to 500°C.
(3) The at least one preliminary bent glass sheet 300 manufactured in operation (2) is transferred from the pre-forming mold 2000a to the final-forming mold 2000b by the transfer device 1000, and the at least one preliminary bent glass sheet 300 is subjected to final bending forming by the final-forming mold 2000b, to obtain at least one final bent glass sheet 300 having the temperature greater than or equal to 500°C.
(4) After the final bending forming, the at least one final bent glass sheet 300 manufactured in operation (3) is transferred from the final-forming mold 2000b to the pre-forming mold 2000a or the annealing ring by the transfer device 1000, the at least one final bent glass sheet 300 is got into the annealing device along with the pre-forming mold 2000a or the annealing ring, and the at least one final bent glass sheet 300 is annealed and cooled by the annealing device.

In the glass bending forming system provided in embodiments of the present disclosure, the glass sheet 300 heated is subjected to the preliminary bending forming by the pre-forming mold 2000a, and then the preliminary bent glass sheet 300 is transferred by the transfer device 1000 to the final bending mold 2000b to be subjected to the final bending forming. Therefore, during the transferring, it is ensured that the glass sheet 300 will not fall off, the optical distortion is avoided, and the optical quality of the final bent glass sheet 300 is improved, so that the yield of bending forming of the glass sheet 300 is improved. It can be understood that the function of the transfer device 1000 is not limited to this. For example, the transfer device 1000 can also be configured to transfer multiple flat glass sheets onto the bending forming mold for stacking and loading, or configured to transfer multiple bent glass sheets subjected to bending forming from the bending forming mold for unloading, or configured to stack multiple bent glass sheets subjected to bending forming and simultaneously transfer the multiple bent glass sheets that are stacked to a loading table of a glass washing machine for cleaning.

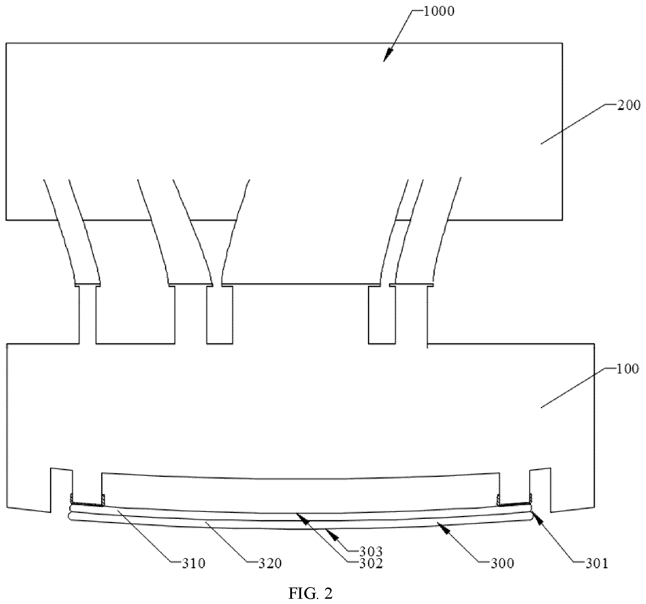

Reference can be made to FIG. 2, which is a schematic structural view of transferring a glass sheet 300 by using a transfer device 1000 in the glass bending forming system illustrated in FIG. 1.

The transfer device 1000 includes a suction table 100 and a vacuum suction device 200. The vacuum suction device 200 is in communication with a suction channel of the suction table 100 through a connecting tube, so as to provide a negative pressure to at least one glass sheet 300 by means of air suction. The suction table 100 can suck the at least one glass sheet 300 and transfer the at least one glass sheet 300 by using the negative pressure, so as to transfer the at least one glass sheet 300 from a first position to a second position. It can be understood that in other embodiments, the transfer device 1000 may further include a driving device. The driving device is connected to the suction table 100, and is configured to drive the suction table 100 to move, so as to drive the at least one glass sheet 300 sucked on the suction table 100 to move. For example, the driving device may be an electric motor.

In the present disclosure, the transfer device 1000 is configured to transfer a glass sheet 300 having a certain temperature and a certain curvature. Specifically, in this embodiment, the glass sheet 300 transferred by the transfer device 1000 is a bent glass sheet having a temperature greater than or equal to 500°C, where the bent glass sheet has a concave surface and a convex surface. When one bent glass sheet is transferred by the transfer device 1000, the concave surface of the bent glass sheet faces the suction table 100, and the transfer device 1000 sucks air between the bent glass sheet and the suction table 100 to perform vacuum suction, so that the bent glass sheet is stably sucked on the transfer device 1000. When at least two, such as two, three, four, etc., stacked bent glass sheets are transferred by the transfer device 1000, the transfer device 1000 sucks air between a bent glass sheet closest to the suction table 100 and the suction table 100 from the front to perform vacuum suction, and sucks air between adjacent bent glass sheets to perform vacuum suction, so that the at least two stacked bent glass sheets are stably sucked on the transfer device 1000.

In this embodiment, for example, the transfer device 1000 transfers two stacked bent glass sheets, specifically, a first glass-sheet 310 and a second glass-sheet 320. Silica fume particles (not shown) for preventing glass sticking are usually disposed between the first glass-sheet 310 and the second glass-sheet 320. The thickness of the first glass-sheet 310 is less than or equal to the thickness of the second glass-sheet 320. When the first glass-sheet 310 and the second glass-sheet 320 are manufactured as laminated glass for vehicle window glass, the first glass-sheet 310 may be used as an inner glass sheet facing the inside of the vehicle, and the second glass-sheet 320 may be used as an outer glass sheet facing the outside of the vehicle. It can be understood that, when the transfer device 1000 transfers three or more stacked bent glass sheets, silica fume particles for preventing glass sticking are disposed between two adjacent bent glass sheets.

In this embodiment, the transfer device 1000 is used to transfer the first glass-sheet 310 and the second glass-sheet 320. The first glass-sheet 310 is closer to the suction table 100 than the second glass-sheet 320. The transfer device 1000 performs vacuum suction on the first glass-sheet 310 and the second glass-sheet 320. The transfer device 1000 sucks air between the concave surface of the first glass-sheet 310 and the suction table 100 from the front, so as to ensure that the first glass-sheet 310 moves in a target direction and holds for a long enough time without falling during the transferring. Meanwhile, an upward airflow is generated at the periphery of both the side surface of the first glass-sheet 310 and the side surface of the second glass-sheet 320, to take away air between the first glass-sheet 310 and the second glass-sheet 320. Therefore, the concave surface of the second glass-sheet 320 is stably sucked on the convex surface of the first glass-sheet 310, to ensure that the second glass-sheet 320 can be sucked together with the first glass-sheet 310. In addition, it is ensured that the pressure between the first glass-sheet 310 and the second glass-sheet 320 is not too large, so as to avoid mutual squeezing between the first glass-sheet 310 and the second glass-sheet 320, thereby avoiding the silica fume particles between the first glass-sheet 310 and the second glass-sheet 320 from causing the problem that optical quality of the product exceeds the standard, the yield is affected, and etc. Therefore, the optical distortion is avoided, and the optical quality of the bent glass sheet is improved.

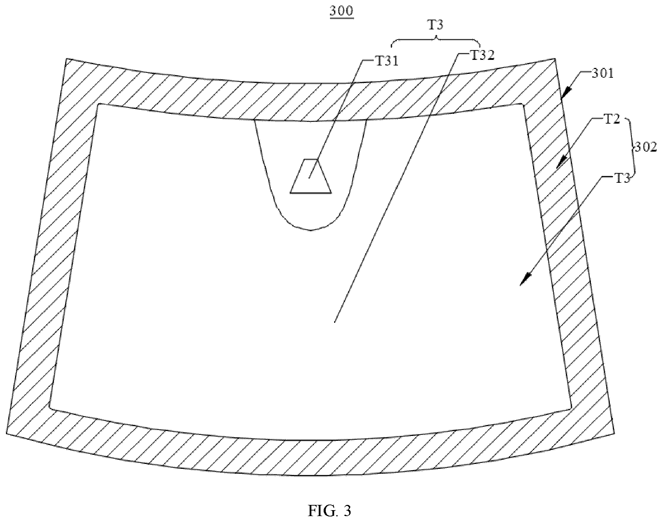

Reference can be made to FIG. 3, which is a schematic top view of the glass sheet 300 in a structure illustrated in FIG. 2.

The glass sheet 300 in this embodiment can be manufactured as laminated glass to be mounted on a vehicle for windshield glass. The glass sheet 300 has a side surface 301, a first main surface 302, and a second main surface 303. The first main surface 302 and the second main surface 303 are opposite to each other. The first main surface 302 of the glass sheet 300 facing the transfer device 1000 includes an edge printing region T2 and a transparent region T3. The transparent region T3 is located at the inner side of the edge printing region T2. When the glass sheet 300 is a bent glass sheet, the first main surface 302 facing the transfer device 1000 is concave and the second main surface 303 away from the transfer device 1000 is convex. The edge printing region T2 is arranged around the peripheral edge of the first main surface 302. The edge printing region T2 is generally a region where a masking layer printed with opaque ink is located. The opaque ink may be printed on the first glass-sheet 310 and/or the second glass-sheet 320. For example, the opaque ink may be ceramic ink, ultraviolet ink, etc. The transparent region T3 includes an information collection region T31 and a primary viewing region T32. The information collection region T31 allows light to pass through, where the light is emitted and/or received by an information collection device. The information collection system includes, but is not limited to, a laser radar, an optical sensor, an infrared camera, a visible light camera, etc. The primary viewing region T32 is used for a driver to observe scenery and a driving environment outside the vehicle. A head-up display (HUD) region may further be disposed in the primary viewing region T32. The HUD region is used for displaying a HUD image, for example, displaying information such as driving speed, dynamic navigation, road safety warning, commercial area information, etc.

In this embodiment, when the suction table 100 transfers the glass sheet 300, the suction table 100 is in direct contact with the edge printing region T2 or a position corresponding to the edge printing region T2 of the glass sheet 300 for suction. Since the edge printing region T2 does not need to transmit light and perform imaging, the suction table 100 can use a relatively large negative pressure to act on the edge printing region T2, and the optical quality of the glass sheet 300 will not be affected.

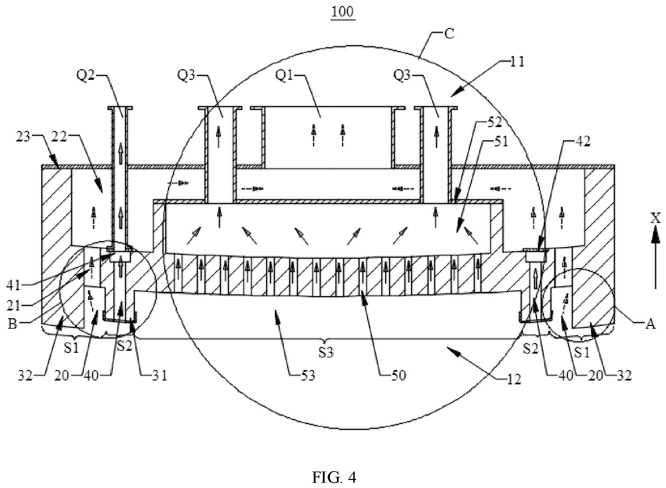

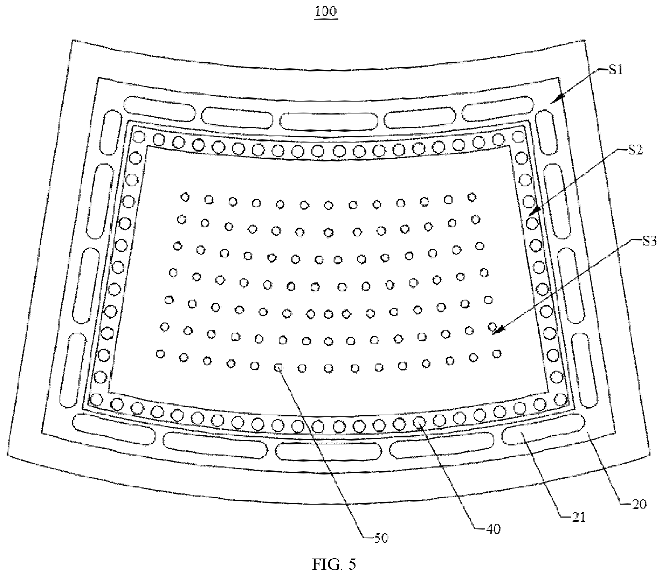

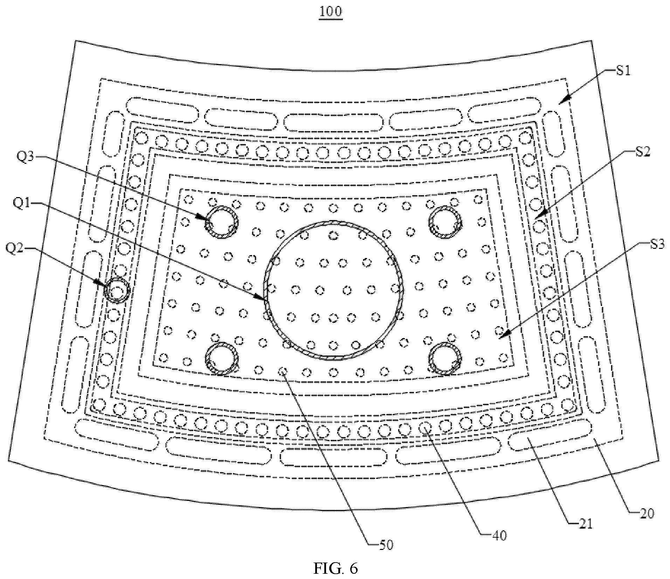

Reference can be made to FIG. 4 to FIG. 6, where FIG. 4 is a schematic cross-sectional structural view of a suction table 100 of the transfer device 1000 in the structure illustrated in FIG. 2, FIG. 5 is a schematic bottom view of the suction table 100 illustrated in FIG. 4, and FIG. 6 is a schematic structural top view of the suction table 100 illustrated in FIG. 4.

For ease of description, a direction in which air is sucked by the transfer device 1000 illustrated in FIG. 4 is X-axis direction. FIG. 5 is a schematic view of a planar structure of the suction table 100 viewed in positive X-axis direction, and FIG. 6 is a schematic view of a planar structure of the suction table 100 viewed in negative X-axis direction.

The suction table 100 includes a suction end 11 and a suction operating end 12. a suction channel is further defined inside the suction table 100. The suction end 11 is in communication with the suction operating end 12 through the suction channel. Specifically, in this embodiment, there are three suction channels, which are a first suction channel Q1, a second suction channel Q2, and a third suction channel Q3, respectively. The vacuum suction device 200 is mounted at the suction end 11 and is in communication with the suction channel. The vacuum suction device 200 is configured to suck air through the suction channel, to generate a negative pressure at the suction operating end 12. A trend of air flowing towards the first suction channel Q1 is shown by dotted arrows in FIG. 3. A trend of air flowing towards the second suction channel Q2 is shown by hollow arrows in FIG. 3. A trend of air flowing towards the third suction channel Q3 is shown by solid arrows in FIG. 3. An overall trend of air flowing towards the first suction channel Q1, the second suction channel Q2, and the third suction channel Q3 is that air moves in positive X-axis direction.

The suction operating end 12 has a first edge-region S1, a second edge-region S2, and a central region S3. The second edge-region S2 is in direct contact with the edge printing region T2 or a position corresponding to the edge printing region T2. The second edge-region S2 is located at the inner side of the first edge-region S1. The first edge-region S1 surrounds the second edge-region S2. The central region S3 is located at the inner side of the second edge-region S2. The second edge-region S2 surrounds the central region S3.

One end of the first suction channel Q1 is connected to the vacuum suction device 200, and the other end of the first suction channel Q1 is in communication with the first edge-region S1. The vacuum suction device 200 can provide a first negative pressure to the first edge-region S1 through the first suction channel Q1. One end of the second suction channel Q2 is connected to the vacuum suction device 200, and the other end of the second suction channel Q2 is in communication with the second edge-region S2. The vacuum suction device 200 can provide a second negative pressure to the second edge-region S2 through the second suction channel Q2. One end of the third suction channel Q3 is connected to the vacuum suction device 200, and the other end of the third suction channel Q3 is in communication with the central region S3. The vacuum suction device 200 can provide a third negative pressure to the central region S3 through the third suction channel Q3. The first suction channel Q1, the second suction channel Q2, and the third suction channel Q3 are separated from one another, so that the magnitude of the first negative pressure generated in the first edge-region S1, the magnitude of the second negative pressure generated in the second edge-region S2, and the magnitude of the third negative pressure generated in the central region S3 can be independently controlled. In the suction table 100 in the embodiments of the present disclosure, under the combined action of the second negative pressure and the third negative pressure, the weight of the glass sheet 300 is sucked and the profile of the glass sheet 300 is kept stable. Under the action of the first negative pressure, vacuum suction occurs at the side surfaces of the glass sheets to take away air between two adjacent glass sheets, so that the glass sheet away from the suction table 100 is stably sucked on the lower surface of the glass sheet closest to the suction table 100. The first negative pressure cannot be too large to avoid an excessive squeezing force between the multiple glass sheets 300. The third negative pressure cannot be too large to avoid a change in the profile of the glass sheets 300. By disposing the second edge-region S2 to provide the second negative pressure, the vacuum pressure value of the first negative pressure and the vacuum pressure value of the third negative pressure can be reduced, thereby realizing steady transfer of the multiple glass sheets 300, and ensuring the optical quality of the multiple glass sheets 300.

In the embodiments of the present disclosure, when the suction table 100 is used to transfer the multiple glass sheets 300, the first negative pressure generated in the first edge-region S1 is used to perform the vacuum suction on the side surface of the first glass-sheet 310 and the side surface of the second glass-sheet 320, so as to take away the air between the first glass-sheet 310 and the second glass-sheet 320, so that the second glass-sheet 320 can be sucked together with the first glass-sheet 310, and the excessive pressing force between the first glass-sheet 310 and the second glass-sheet 320 can be avoided. The second edge-region S2 is in direct suction contact with the edge printing region T2 or a position corresponding to the edge printing region T2 of the first glass-sheet 310 for suction. The second negative pressure generated is used to suck the edge printing region T2 or the position corresponding to the edge printing region T2 in the main surface 302 of the first glass-sheet 310, so as to lift the first glass-sheet 310, so that it is ensured that the multiple glass sheets 300 will not fall off for a long enough time. In addition, since the edge printing region T2 in the main surface 302 does not need to transmit light and perform imaging, the relatively large second negative pressure generated in the second edge-region S2 will not affect the optical quality of the glass sheet 300, and a hole mark formed by direct contact between the edge printing region T2 or the position corresponding to the edge printing region T2 and the second edge-region S2 will also not affect the optical quality of the glass sheet 300. The third negative pressure generated in the central region S3 is used to suck the central region S3 in the main surface 302 of the first glass-sheet 310. The third negative pressure and the second negative pressure are used to suck the first glass-sheet 310 together. Since the temperature of the glass sheet 300 is greater than or equal to 500°C, the third negative pressure can keep the central position of the glass sheet 300 from sagging under the gravity, thereby avoiding the large fluctuation of the profile caused by sagging of the central position of the glass sheet 300 under the gravity. In addition, the suction hole mark will not be left in the central region S3 of the glass sheet 300 affecting the optical quality of the glass sheet 300.

It can be understood that, in other embodiments, the suction table 100 may not define the third suction channel Q3. In other words, no third negative pressure is generated in the central region S3 of the suction operating end 12, the first negative pressure is generated in the first edge-region S1 of the suction operating end 12 through the first suction channel Q1 to suck the air between the first glass-sheet 310 and the second glass-sheet 320, and the second negative pressure is generated in the second edge-region S2 of the suction operating end 12 through the second suction channel Q2 to lift the first glass-sheet 310. Therefore, the transfer effect of the multiple glass sheets 300 is ensured, and excessive extrusion between the first glass-sheet 310 and the second glass-sheet 320 is avoided.

In the suction table 100 provided in the embodiments of the present disclosure, the first negative pressure generated in the first edge-region S1, the second negative pressure generated in the second edge-region S2, and the third negative pressure generated in the central region S3 can be controlled independently. By controlling the vacuum pressure value P1 of the first negative pressure and the vacuum pressure value P3 of the third negative pressure to be sufficiently small, and the vacuum pressure value P2 of the second negative pressure to be sufficiently large, the suction table 100 can transfer multiple glass sheets 300 in a high temperature state (greater than or equal to 500°C). Meanwhile, it can be ensured that the first glass-sheet 310 and the second glass-sheet 320 that are stacked will not be squeezed against each other during the transferring, so as to avoid the optical distortion defects in the transparent region T3 of the glass sheet 300, thereby ensuring the transfer effect of transferring the glass sheet 300 and the optical quality of the glass sheet 300.

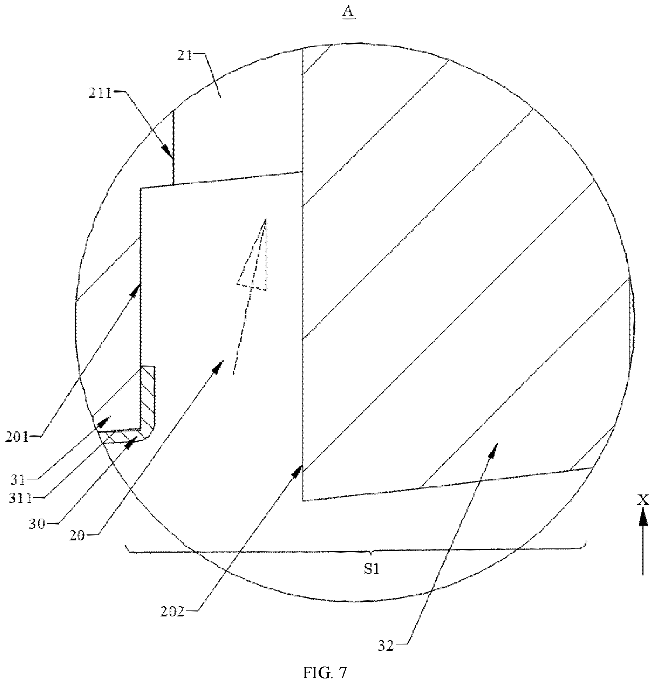

Reference can continue to be made to FIG. 4, FIG. 5, and FIG. 7, where FIG. 7 is a partial enlarged view of the suction table 100 at portion A illustrated in FIG. 4.

The suction table 100 defines a first suction groove 20, multiple first communicating holes 21, a first chamber 22, and a first sealing cover 23.

In this embodiment, the first suction groove 20 is a ring-type groove. An opening of the first suction groove 20 is defined in the first edge-region S1 of the suction operating end 12. The multiple first communicating holes 21 are defined at the groove bottom of the first suction groove 20 and are in communication with the first suction groove 20 and the first chamber 22. An opening of the first chamber 22 is defined at the suction end 11 and is in communication with the first suction channel Q1. The first sealing cover 23 covers the first chamber 22 and is used for sealing the opening of the first chamber 22 (referring to FIG. 4). In addition, an opening hole is defined in a partial region of the first sealing cover 23, so that the first chamber 22 is in communication with the first suction channel Q1.

The vacuum suction device 200 is configured to suck air in the first edge-region S1 through the first suction channel Q1 to generate the first negative pressure. Specifically, the vacuum suction device 200 is configured to suck the air through the first suction channel Q1, the first chamber 22, and the multiple first communicating holes 21, so that the first negative pressure is generated at the first suction groove 20 to suck the air between the first glass-sheet 310 and the second glass-sheet 320, and the sucked air flows along the first suction groove 20, the multiple first communicating holes 21, the first chamber 22, and the first suction channel Q1 in sequence.

The first suction groove 20 has an inner groove-wall 201 and an outer groove-wall 202. The inner groove-wall 201 is closer to the second edge-region S2 than the outer groove-wall 202. In a direction opposite to a direction in which the first suction groove 20 extends towards the first suction channel Q1, that is, in negative X-axis direction, the outer groove-wall 202 exceeds the inner groove-wall 201. In other words, a distance between a free end (bottom end) of the outer groove-wall 202 and the groove bottom of the first suction groove 20 is larger than a distance between a free end (bottom end) of the inner groove-wall 201 and the groove bottom of the first suction groove 20. Therefore, a vacuum suction space with a high outer height and a low inner height is defined outside the side surface of the glass sheet 300, which is beneficial to more stably sucking air between the multiple glass sheets 300. In some specific embodiments, in negative X-axis direction, the height of the outer groove-wall 202 exceeding the inner groove-wall 201 is larger than or equal to the thickness of one of the glass sheets 300 closest to the suction table 100, which is beneficial to sucking the air between the multiple glass sheets 300 faster. In this embodiment, the height of the outer groove-wall 202 exceeding the inner groove-wall 201 is greater than or equal to the thickness of the first glass-sheet 310. In some specific embodiments, in negative X-axis direction, the height of the outer groove-wall 202 exceeding the inner groove-wall 201 is smaller than or equal to the total thickness of all the glass sheets 300, so as to prevent the outer groove-wall 202 from interfering with other forming molds. In this embodiment, the height of the outer groove-wall 202 exceeding the inner groove-wall 201 is less than or equal to the total thickness of the first glass-sheet 310 and the second glass-sheet 320. In some specific embodiments, in negative X-axis direction, the height of the outer groove-wall 202 exceeding the inner groove-wall 201 is 2.5 mm to 8 mm.

The width of the first communicating hole 21 is smaller than the width of the first suction groove 20. The first communicating hole 21 has an outer hole-wall 211. The outer hole-wall 211 is flush with the outer groove-wall 202 of the first suction groove 20, thereby ensuring smooth air suction and stability of transferring the multiple glass sheets 300.

Specifically, the suction table 100 is further provided with a first boss 31 and a second boss 32. The first boss 31 and the second boss 32 are both disposed at the suction operating end 12. The first suction groove 20 is defined between the first boss 31 and the second boss 32. The second boss 32 is located at the outer side of the first suction groove 20. The second boss 32 has an exceeding surface and two sidewalls connected to the exceeding surface. The exceeding surface is a bottom end-face of the second boss. The sidewall of the second boss 32 close to the first boss 31 is the outer groove-wall 202 of the first suction groove 20. The first boss 31 has a suction contact surface 311, and a first sidewall and a second sidewall that are connected to the suction contact surface 311 and are opposite to each other. The suction contact surface 311 is a bottom end-face of the first boss. The first sidewall of the first boss 31 is close to the second boss and servers as the inner groove-wall 201 of the first suction groove 20. The second sidewall of the first boss 31 is far away from the second boss and is used for defining the central region S3. The second boss 32 and the first suction groove 20 are in the first edge-region S1. The first negative pressure can be generated at the side surface of the multiple glass sheets 300 by using the second boss 32 and the first suction groove 20, to suck the air between the multiple glass sheets 300. In negative X-axis direction, the second boss 32 exceeds the first boss 31, so that the distance between the free end (bottom end) of the outer groove-wall 202 and the groove bottom of the first suction groove 20 is larger than the distance between the free end (bottom end) of the inner groove-wall 201 and the groove bottom of the first suction groove 20. In this embodiment, each of the first boss 31 and the second boss 32 is a ring-type boss.

When the suction table 100 is used to transfer the multiple glass sheets 300, the edge printing region T2 or the position corresponding to the edge printing region T2 in the main surface 302 is in contact with the first boss 31. The side surfaces 301 of the multiple glass sheets are exposed in the first suction groove 20. The first negative pressure is generated at the first suction groove 20 to suck the air between the first glass-sheet 310 and the second glass-sheet 320. The sucked air is blocked by the outer groove-wall 202 exceeding the inner groove-wall 201 to change a travelling direction, and then enters the first communicating hole 21 along the outer groove-wall 202. The outer groove-wall 202 exceeds the inner groove-wall 201, so that the suction can be performed on the side surfaces 301 of the multiple glass sheets 300.

In the embodiments of the present disclosure, the first communicating hole 21 may be a circular hole, a triangular hole, a quadrilateral hole, an elongated hole, or the like. In some specific embodiments, the first communicating hole 21 is an elongated hole. A length direction of the elongated hole is parallel to a length direction of the first suction groove 20. The width of the elongated hole is 2 mm to 12 mm. In other specific embodiments, the width of the elongated hole is 6 mm to 8 mm.

In this embodiment, the first boss 31 has the suction contact surface 311. When the multiple glass sheets 300 are sucked at the suction operating end 12 of the suction table 100, the first main surface 302 of the glass sheet 300 closest to the suction table 100 is in direct contact with the suction contact surface 311. In this case, the suction contact surface 311 is in direct contact with the edge printing region T2 or the position corresponding to the edge printing region T2 in the first main surface 302. In some embodiments, in order to reduce the frictional force at the edge printing region T2 or the position corresponding to the edge printing region T2, the first boss 31 is covered by a flexible mold textile 30. The flexible mold textile 30 is configured to isolate the suction contact surface 311 from the glass sheet 300. Therefore, the direct contact between the glass sheet 300 in a high temperature state and the suction contact surface 311 of the first boss 31 is avoided, thereby protecting the main surface 302 of the glass sheet 300 from being scratched. In this embodiment, the flexible mold textile 30 is formed by weaving high-temperature-resistant metal wires, such as stainless steel wires, etc. The flexible mold textile 30 has good air permeability, and does not interfere with the generation of the first negative pressure, the second negative pressure, and the third negative pressure.

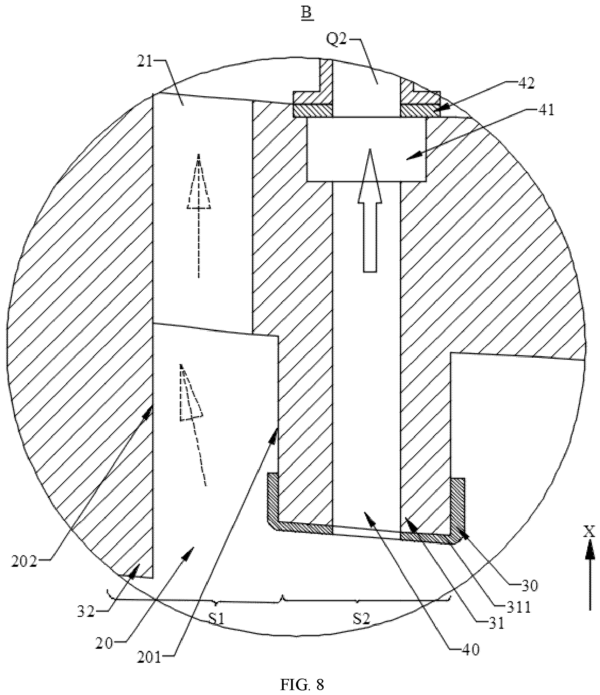

Reference can continue to be made to FIG. 4, FIG. 5, and FIG. 8, where FIG. 8 is a partial enlarged view of the suction table 100 at portion B illustrated in FIG. 4.

The suction table 100 defines multiple second suction holes 40, a second communicating groove 41, and a second sealing cover 42. The groove bottom of the second communicating groove 41 is in communication with the multiple second suction holes 40, so that the multiple second suction holes 40 define a communicating channel through the second communicating groove 41. The second sealing member 42 covers the second communicating groove 41 and is used for sealing an opening of the second communicating groove 41 (referring to FIG. 4). In addition, an opening hole is defined in a partial region of the second sealing member 42, so that the multiple second suction holes 40 are in communication with the second suction channel Q2 (referring to FIG. 4 and FIG. 8). The opening hole of the second communicating groove 41 is in communication with the second suction channel Q2, so that the multiple second suction holes 40 are in communication with the second suction channel Q2, thereby facilitating the vacuum suction device 200 to suck air at the multiple second suction holes 40 through the second suction channel Q2 to generate the second negative pressure.

The first boss 31 and the multiple second suction holes 40 are in the second edge-region S2. The multiple second suction holes 40 each extend through the suction contact surface 311 of the first boss 31. The second negative pressure can be generated at the suction contact surface 311 of the first boss 31 by using the first boss 31 and the multiple second suction holes 40, to suck air between the first main surface 302 of the glass sheet 300 and the suction contact surface 311, so that the glass sheet 300 is stably sucked on the suction contact surface 311. The vacuum suction device 200 is configured to suck air in the second edge-region S2 through the second suction channel Q2 to generate the second negative pressure, specifically, generate the second negative pressure at the multiple second suction holes 40, to suck air and suck the edge printing region T2 of the glass sheet 300. The sucked air flows along the second suction holes 40, the second communicating groove 41, and the second suction channel Q2 in sequence.

The multiple second suction holes 40 are distributed on the suction contact surface 311 of the first boss 31 and around the central region S3. The vacuum suction device 200 is configured to suck air in the second edge-region S2 through the second suction channel Q2 to generate the second negative pressure, specifically, generate the second negative pressure at the multiple second suction holes 40, to suck the edge printing region T2 in the main surface 302 of the glass sheet 300 and lift the first glass-sheet 310, so that the concave surface of the first glass-sheet 300 is in direct contact with the suction contact surface 311 or the flexible mold textile 30. For a glass sheet 300 having a small edge-portion curvature, the edge printing region T2 in the main surface 302 is likely to be separated from the second edge-region S2 at the suction operation end 12 of the suction table 100. In addition, for the multiple glass sheets 300 each having a small edge-portion curvature, the first glass-sheet 310 and the second glass-sheet 320 are more likely to be separated from each other at the side surface 301, thereby causing the one or more stacked glass sheets 300 to be separated from the suction table 100. Therefore, for the multiple glass sheets 300 each having the small edge-portion curvature, the vacuum pressure value of the second negative pressure generated in the second edge-region S2 is required to be greater.

Under the condition that the edge printing region T2 in the main surface 302 have an nonuniform curvature, the multiple second suction holes 40 for sucking the edge printing region T2 in the main surface 302 may be adjusted and arranged according to the curvature of the edge printing region T2. Specifically, for a region having a small curvature in the edge printing region T2, a second suction hole 40 having a larger cross-sectional area and/or more dense second suction holes 40 may be defined alone, so as to facilitate the generation of a greater vacuum pressure value in the region having the small local curvature in the edge printing region T2. In other words, the multiple second suction holes 40 defined in the second edge-region S2 are not completely identical in cross-sectional area. Alternatively, the distribution of the multiple second suction holes 40 in the second edge-region S2 are nonuniformly in the second edge-region S2, and may vary according to the curvature of the edge printing region T2 in the main surface 302. Here, since the edge printing region T2 in the main surface 302 is a non-optical region of the glass sheet 300, increasing the vacuum pressure value of the region alone may not adversely affect the optical quality and the profile quality of the glass sheet 300.

In addition, when the area of the main surface 302 of the glass sheet 300 is larger, the vacuum pressure value P1 of the first negative pressure and the second negative pressure P2 that are required are greater, and the vacuum pressure value P2 of the second negative pressure is greater than the vacuum pressure value P1 of the first negative pressure, so as to ensure that the generated vacuum suction force is sufficient to overcome the gravity of the multiple glass sheets 300.

The multiple second suction holes 40 are defined in the first boss 31. When the suction table 100 transfers the multiple glass sheets 300, the edge printing region T2 in the main surface 302 of the glass sheet 300 are sucked through the multiple second suction holes 40, to lift the first glass-sheet 310. Generally, a cross-sectional area of a single second suction hole 40 is smaller than a cross-sectional area of a single first communicating hole 21. In some embodiments, the diameter of the second suction hole 40 is 2 mm to 12 mm, such as 2 mm, 3 mm, 4 mm, 5 mm, 6 mm, 7 mm, 8 mm, 9 mm, 10 mm, 11 mm, or 12 mm.

In this embodiment, through-holes are defined at positions of the flexible mold textile 30 corresponding to the multiple second suction holes 40, so that air can be better sucked at the multiple second suction holes 40 to generate the second negative pressure. In some embodiments, the diameter of the through-hole defined in the flexible mold textile 30 is equal to the diameter of the second suction hole 40. In other embodiments, the diameter of the through-hole is larger than the diameter of the second suction hole 40. In other embodiments, the diameter of the through-hole is smaller than the diameter of the second suction hole 40.

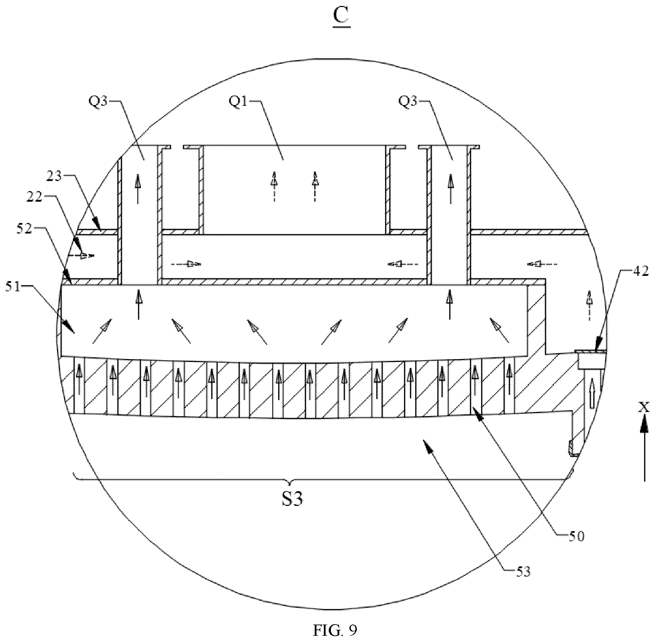

Reference can continue to be made to FIG. 4, FIG. 5, and FIG. 9, where FIG. 9 is a partial enlarged view of the suction table 100 at portion C illustrated in FIG. 4.

The suction table 100 defines multiple third suction holes 50, a second chamber 51, and a third sealing cover 52. Openings of the multiple third suction holes 50 are defined in the central region S3 of the suction operating end 12. The bottom of the second chamber 51 is in communication with the multiple third suction holes 50. The third sealing cover 52 covers the second chamber 51 and is used for sealing an opening of the second chamber 51. In addition, an opening hole is defined in a partial region of the third sealing cover 52, so that the multiple third suction holes 50 are in communication with the third suction channel Q3 (referring to FIG. 4 and FIG. 9). The opening of the second chamber 51 is in communication with the third suction channel Q3, so that the multiple third suction holes 50 are in communication with the third suction channel Q3, thereby facilitating the vacuum suction device 200 to suck air at the multiple third suction holes 50 through the third suction channel Q3 to generate the third negative pressure.

The vacuum suction device 200 is configured to suck air in the central region S3 through the third suction channel Q3 to generate the third negative pressure, specifically, generate the third negative pressure at the multiple third suction holes 50, so as to suck the transparent region T3 of the glass sheet 300. The sucked air flows along the third suction holes 50, the second chamber 51, and the third suction channel Q3 in sequence.

The multiple third suction holes 50 are defined in the central region S3 defined by the second sidewall of the first boss 31. The vacuum suction device 200 is configured to suck air in the central region S3 through the third suction channel Q3, so as to generate the third negative pressure. Specifically, the third negative pressure is generated at the third suction holes 50 to assist the suction of the transparent region T3 of the first glass-sheet 310. Compared with the second negative pressure generated in the second edge-region S2, the third negative pressure generated in the central region S3 plays an auxiliary role, and the vacuum pressure value P3 of the third negative pressure is less than the vacuum pressure value P2 of the second negative pressure.

In some embodiments, the diameter of the third suction hole 50 is 2 mm to 12 mm. For example, the diameter of the third suction hole 50 in this embodiment may be 2 mm, 3 mm, 4 mm, 5 mm, 6 mm, 7 mm, 8 mm, 9 mm, 10 mm, 11 mm, or 12 mm. The multiple third suction holes 50 are arranged in an array. The array has the number of rows greater than 1 and the number of columns greater than 1. As illustrated in FIG. 4, in this embodiment, the multiple third suction holes 50 are arranged in an array of seven rows and thirteen columns to uniformly suck the transparent region T3 in the main surface 302, thereby ensuring the optical quality of the glass sheet 300.

In this embodiment, a clearance recess is further defined in the central region S3. The clearance recess 53 located at the inner side of the first boss 31. The clearance recess 53 is a circular recess and is surrounded by an inner wall of the first boss 31. The multiple third suction holes 50 are distributed at the recess bottom of the clearance recess 53. The second sidewall of the first boss 31 opposite to the first sidewall is a recess wall of the clearance recess 53. The clearance recess 53 is used for isolating the third suction hole 50 from the glass sheet 300 to avoid the direct contact between the third suction hole 50 and the glass sheet 300, thereby ensuring the optical quality of the transparent region T3 of the glass sheet 300, and thus ensuring the optical quality of the information collection region T31 and the primary viewing region T32 in the main surface 302. The third negative pressure generated at the multiple third suction holes 50 may be uniformly distributed in the clearance recess 53.

In a specific embodiment, the transfer device 1000 is configured to transfer multiple flat glass sheets 300 onto the bending forming mold or the pre-forming mold for stacking and loading, or configured to transfer multiple bent glass sheets subjected to the bending forming from the bending forming mold for unloading, or configured to stack the multiple bent glass sheets subjected to the bending forming and simultaneously transfer the multiple bent glass sheets that are stacked to the loading table of the glass washing machine for cleaning. Different from the above embodiments, the glass sheet 300 in this embodiment is a glass sheet having a temperature less than 500°C, and the glass sheet 300 may be a flat sheet not subjected to the bending forming or a bent sheet subjected to the bending forming. Different from the conventional transferring method, the transfer device 1000 transfers the glass sheet 300 from above the multiple glass sheets 300, is not affected by the device below the glass sheet 300 and the movement of the device below the glass sheet 300, and has a good transferring effect. Meanwhile, since the glass sheet 300 has the temperature less than 500°C, the suction of the suction table 100 does not have any influence on the optical quality of the glass sheet 300. This means that the vacuum pressure value P1 of the first negative pressure, the vacuum pressure value P2 of the second negative pressure, and the vacuum pressure value P3 of the third negative pressure all have no limiting value. In other words, the vacuum pressure value P1 of the first negative pressure, the vacuum pressure value P2 of the second negative pressure, and the vacuum pressure value P3 of the third negative pressure are all great enough. Therefore, it is ensured that the generated vacuum suction force is sufficient to overcome the gravity of the multiple glass sheets 300, and the greater number of and/or heavier stacked glass sheets 300 can be transferred. In addition, a larger movement speed and acceleration can be achieved during the transfer, thereby improving the transferring efficiency.

Although the transfer device and the transfer system of the present disclosure are described in detail above, the present disclosure is not limited to the specific implementations described above. Therefore, any improvements, equivalent modifications and replacements, etc., carried out according to the technical key points of the present disclosure may belong to the scope of protection of the present disclosure.

## Claims

1. A transfer device, wherein the transfer device comprises a suction table, the suction table has a first edge-region and a second edge-region, the second edge-region is located at an inner side of the first edge-region, and the first edge-region surrounds the second edge-region; and
the suction table defines a first suction groove, a plurality of second suction holes, a first suction channel, and a second suction channel, the first suction groove is defined in the first edge-region, the plurality of second suction holes are defined in the second edge-region, the first suction channel is in communication with the first suction groove and is used for providing a first negative pressure, the second suction channel is in communication with the plurality of second suction holes and is used for providing a second negative pressure, and the first negative pressure and the second negative pressure are used for sucking at least one glass sheet on the transfer device.

2. The transfer device of claim 1, wherein the suction table further has a central region, the central region is located at an inner side of the second edge-region, and the second edge-region surrounds the central region; and
the suction table further defines a plurality of third suction holes and a third suction channel, the plurality of third suction holes are defined in the central region, the third suction channel is in communication with the plurality of third suction holes and is used for providing a third negative pressure, and the first negative pressure, the second negative pressure, and the third negative pressure are used for sucking the at least one glass sheet on the transfer device.

3. The transfer device of claim 2, wherein the first negative pressure has a vacuum pressure value of P1, and the second negative pressure has a vacuum pressure value of P2, P2 being greater than P1.

4. The transfer device of claim 3, wherein the third negative pressure has a vacuum pressure value of P3, P2 being greater than P3.

5. The transfer device of claim 1 or 2, wherein the at least one glass sheet is bent and has a temperature greater than or equal to 500°C.

6. The transfer device of claim 1 or 2, wherein at least two stacked glass sheets are sucked on the transfer device, and silica fume particles are disposed between adjacent two of the at least two glass sheets.

7. The transfer device of claim 2, wherein a clearance recess is defined in the central region, and the plurality of third suction holes are distributed at a recess bottom of the clearance recess.

8. The transfer device of claim 2, wherein each of the plurality of second suction holes has a larger cross-sectional area than each of the plurality of third suction holes.

9. The transfer device of claim 2, wherein the plurality of third suction holes are arranged in an array, and the array has the number of rows greater than 1 and the number of columns greater than 1.

10. The transfer device of claim 1, wherein the first suction groove has an inner groove-wall and an outer groove-wall, the inner groove-wall is closer to the second edge-region than the outer groove-wall, and in a direction opposite to a direction in which the first suction groove extends towards the first suction channel, the outer groove-wall exceeds the inner groove-wall.

11. The transfer device of claim 10, wherein a height of the outer groove-wall exceeding the inner groove-wall is larger than or equal to a thickness of one of the at least one glass sheet closest to the suction table.

12. The transfer device of claim 10, wherein a height of the outer groove-wall exceeding the inner groove-wall is smaller than or equal to a total thickness of the at least one glass sheet.

13. The transfer device of claim 1, wherein a plurality of first communicating holes are defined at a groove bottom of the first suction groove, and the first suction channel is in communication with the first suction groove through the plurality of first communicating holes.

14. The transfer device of claim 13, wherein each of the plurality of first communicating holes has a larger cross-sectional area than each of the plurality of second suction holes.

15. The transfer device of claim 1, wherein the suction table is further provided with a first boss and a second boss, the first suction groove is defined between the first boss and the second boss, the second boss is located at an outer side of the first suction groove, and in a direction opposite to a direction in which the first suction groove extends towards the first suction channel, the second boss exceeds the first boss.

16. The transfer device of claim 15, wherein the first boss has a suction contact surface, and the plurality of second suction holes extend through the suction contact surface.

17. The transfer device of claim 16, wherein the first boss is covered by a flexible mold textile, and the flexible mold textile is configured to isolate the suction contact surface from the at least one glass sheet.

18. The transfer device of claim 1, wherein the plurality of second suction holes have cross-sectional areas that are not completely identical, and/or the plurality of second suction holes are nonuniformly distributed in the second edge-region.

19. The transfer device of claim 2, further comprising a vacuum suction device, wherein the vacuum suction device is in communication with the first suction channel to provide the first negative pressure, the vacuum suction device is in communication with the second suction channel to provide the second negative pressure, and the vacuum suction device is in communication with the third suction channel to provide the third negative pressure.

20. Use of a transfer device, wherein the transfer device is a transfer device of any one of claims 1 to 19, the transfer device is configured to transfer a plurality of flat glass sheets onto a bending forming mold for stacking and loading, or configured to transfer a plurality of bent glass sheets subjected to bending forming from the bending forming mold for unloading, or configured to stack a plurality of bent glass sheets subjected to bending forming and simultaneously transfer the plurality of bent glass sheets that are stacked to a loading table of a glass washing machine for cleaning.

21. A glass bending forming system, comprising the transfer device of any one of claims 1 to 19, and further comprising a heating device, a pre-forming mold, a final-forming mold, and an annealing device; wherein
the heating device is configured to heat the at least one glass sheet to have a temperature greater than or equal to 500°C;
the pre-forming mold is configured to perform preliminary bending forming on the at least one glass sheet having the temperature greater than or equal to 500°C, to obtain at least one preliminary bent glass sheet having the temperature greater than or equal to 500°C;
the final-forming mold is configured to perform final bending forming on the at least one preliminary bent glass sheet having the temperature greater than or equal to 500°C, to obtain at least one final bent glass sheet having the temperature greater than or equal to 500°C;
the transfer device is configured to transfer at least one preliminary bent glass sheet from the pre-forming mold to the final-forming mold, and configured to transfer at least one final bent glass sheet from the final-forming mold to the pre-forming mold or an annealing ring; and
the annealing device is configured to anneal and cool the at least one final bent glass sheet having the temperature greater than or equal to 500°C.
